# EUROPEAN PATENT SPECIFICATION

(11) **EP 4 299 939 B1**
(45) Date of publication and mention of the grant of the patent: **18.11.2026**
(21) Application number: 22781686.5
(22) Date of filing: 01.04.2022
(51) Int. Cl.: F16D 3/84, F16D 3/223

(54) **CONSTANT VELOCITY JOINT PROVIDED WITH GREASE RETAINER**
GLEICHLAUFGELENK MIT SCHMIERFETTHALTERUNG
JOINT HOMOCINÉTIQUE DOTÉ D'UN DISPOSITIF DE RETENUE DE GRAISSE

(30) Priority: 02.04.2021 KR 20210043466
(43) Date of publication of application: 03.01.2024
(73) Proprietor: Hansae Mobility Co., Ltd., Daegu 42981 (KR)
(72) Inventor: JANG, Dal Soo, Dalseong-Gun Daegu 42981 (KR); SEO, Jong Uk, Dalseong-Gun Daegu 42981 (KR)
(74) Representative: Manitz Finsterwald Patent- und Rechtsanwaltspartnerschaft mbB
(86) International application number: PCT/KR2022/004686
(87) International publication number: WO 2022/211567

(56) References cited:
- JP-A- 2017 227 224
- JP-A- 2020 106 125
- JP-A- 2020 106 125
- JP-B2- 6 752 633
- KR-A- 20210 017 262
- KR-B1- 101 994 661
- US-A1- 2003 181 244
- US-A1- 2017 328 416
- US-B2- 10 508 692
- US-B2- 6 988 949

## Description

### [Technical Field]

This invention relates to a constant velocity joint used to transmit the driving force of a vehicle, more specifically, to a constant velocity joint equipped with a grease retainer that is attached to an outer race.

### [Background Art]

A constant velocity joint is a device that transmits rotational driving force and is used as a device to transmit rotational driving force by being incorporated to a drive shaft, a propeller shaft, and the like for vehicles.

A constant velocity joint like a Rzeppa joint includes an outer race, an inner race, a plurality of balls disposed between the outer and inner races, and a ball cage that accommodates the balls. In such a constant velocity joint, the outer race typically has an open side, and the balls, the ball cage, and the inner race are inserted through this open side. In such constant velocity joints, the outer race and the inner race include ball grooves respectively, and ball for transmitting torque are disposed in a space formed by the corresponding ball grooves of the outer race and the inner race.

Such constant velocity joints require lightweight and slim designs. Especially for constant velocity joints applied to a propeller shaft of a vehicle, a slim design is essential due to the high rotational speeds, aiming for weight reduction. A constant velocity joint of a slim design requires a structure that can prevent ball separation during handling processes such as assembling. To prevent the balls from being separated, a method of plastically deforming an end of the outer race through stacking has been employed, however, to realize this method, the length of the outer race becomes longer, leading to an increase in weight and additionally, the inclusion of the stacking process results in a rise in manufacturing costs.

On the other hand, the outer race needs to have the rigidity to withstand large loads generated during the torque transmission process, and as a result, the weight increases due to securing the material and thickness of the portion where the ball groove is formed. To address this issue, a method has been adopted where the part that forms the ball groove is coupled to the power transmission component through an adapter, which is formed separately. However, in this method, the outer race consists of two parts, leading to a complex structure and a complicated assembly process.

### <Prior Art Documents>

- U.S. patent No. US8,313,107 (2012.11.20.)
- U.S. patent No. US9,494,199 (2016.11.15.)

US 2003/181244 A1 discloses a constant velocity joint including a rotatable wheel hub for mounting a wheel of a vehicle which serves as the outer race of the joint. The hub is formed with a through bore that includes a part spherical surface at an inboard end of the hub. An inner joint is installed through the open outboard end and is formed with a plurality of ball grooves whose centers are offset with respect to the center of the joint, forcing balls within the grooves toward the installation end of the hub. A ball retainer device is disposed in the wheel hub bore to retain the balls and seal the joint. Other constant velocity joints are disclosed in US 6988949 B2, US 10 508 692 B2, JP 2017 227224 A and JP 2020 106125 A.

### [Detailed Description of the Invention]

### [Technical Object]

The object of the present invention is to provide a constant velocity joint that is designed to effectively prevent the balls from being separated while minimizing the weight of the outer race.

### [Technical Solutions]

A constant velocity joint according to an embodiment of the present invention includes: an outer race provided with a through-hole extending along a longitudinal axis and forming a plurality of outer ball grooves; an inner race forming a plurality of inner ball grooves that respectively pair with the outer ball grooves; a plurality of balls that are respectively positioned within a space formed by the pair of the outer ball grooves and the internal ball grooves; a ball cage that accommodates the plurality of balls; and a grease retainer coupled to the outer race to prevent grease, which fills a space where the ball and the ball cage are placed, from leaking through the through-hole. The grease retainer has a convex shape protruding towards the ball and the ball cage.

The grease retainer is configured to collide with one or more of the inner race and the ball cage during an articulation between the outer race and the inner race, thereby limiting rotation of the ball cage.

According to one embodiment of the prevent invention, the convex shape may include a spherical shape.

According to another embodiment of the present invention, the convex shape may include a cylindrical shape.

According to another embodiment of the present invention, the convex shape may include a cone shape or a modified cone shape.

The convex shape may include a spherical shape and a cylindrical shape that are interconnected to one another.

According to another embodiment of the present invention, the inner race is provided with a second through-hole extending along a longitudinal axis and forming the plurality of inner ball grooves; the first grease retainer is coupled to the outer race to block the first through-hole in order to prevent grease filled into a space where the balls and the ball cage are placed from leaking out; and the second grease retainer is coupled to the inner race to block the second through-hole in order to prevent grease filled into a space where the balls and the ball cage are placed from leaking out.

The second grease retainer may be configured to collide with one or more of the inner race and the ball cage during an articulation between the outer race and the inner race, thereby limiting rotation of the ball cage.

### [Effects of the Invention]

According to the invention, by forming the outer race with a through hole extending along a longitudinal axis and having a grease retainer blocking this through hole that has a convex shape protruding towards the space where the ball and ball cage are placed, the amount of grease filled between the outer race and the inner race can be reduced. Also, by allowing a ball cage or an inner race to collide with the convex grease retainer during articulation, the articulation can be limited, and thus the separation of the balls can be prevented during processing without additional parts or additional processes like stacking.

### [Brief Description of Drawings]

FIG. 1 is a cross-sectional view of a constant velocity joint according to an embodiment of the present invention.
FIG. 2 is an exploded perspective view of a constant velocity joint according to an embodiment of the present invention.
FIG. 3 is a cross-sectional view of a state in which an outer race and an inner race of a constant velocity joint according to an embodiment of the present invention are angularly displaced with each other.
FIG. 4 is a cross-sectional view of a grease retainer of a constant velocity joint according to another embodiment of the present invention.
FIG. 5 is a cross-sectional view of a grease retainer of a constant velocity joint according to yet another embodiment of the present invention.
FIG. 6 is a cross-sectional view of a grease retainer of a constant velocity joint according to yet another embodiment of the present invention.

### [Embodiments for carrying out the Invention]

Embodiments of the present invention will be described in detail with reference to the accompanying drawings below.

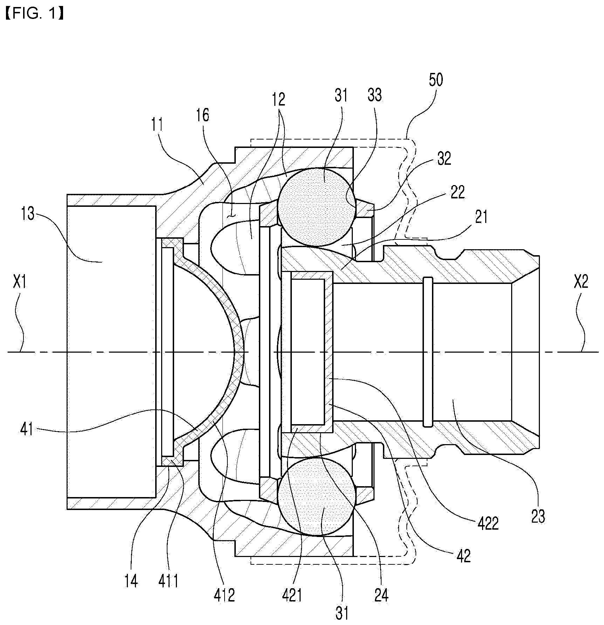

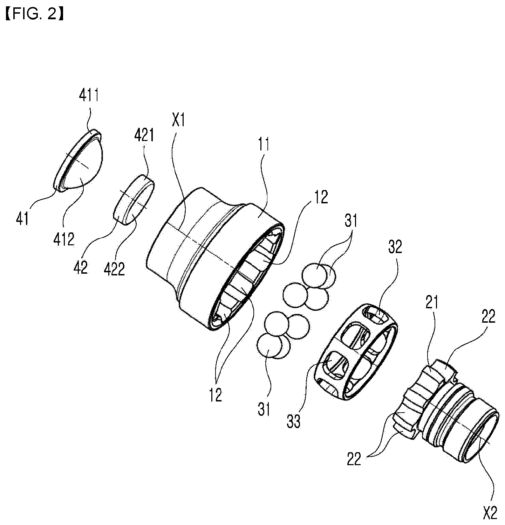

Referring to FIG. 1 to FIG. 3, a constant velocity joint includes an outer race 11 and an inner race 21 configured to be respectively connected to separate power transmission elements. A ball 31 acts as a medium for transmitting torque and is placed between the outer race 11 and the inner race 21 in a state of being accommodated in a pocket 33 of a ball cage 32. The ball 31 may be provided in a plurality, and the outer race 11 and the inner race 21 may each have outer ball grooves 12 and inner ball grooves 22 that pair up to form spaces that accommodate each ball 31. Rotational power transmission between the outer race 11 and the inner race 21 takes place through the ball 31 placed in the space formed by the outer ball grooves 12 and the inner ball grooves 22. FIG. 2 exemplarily shows a case where eight balls 31 are provided, but the number of balls 31 is not limited to this and can vary, such as six, ten, etc.

The outer race 11 forms a through-hole 13 extending along a longitudinal axis X1, and the inner race 21 can also form a through-hole 23 extending along a longitudinal axis X2. In an embodiment of a constant velocity joint according to the present invention, when installed between the differential gear and the propeller shaft, the inner race 21 can be fastened to the output shaft of the differential gear inserted into the through-hole 23 through a spline coupling, and one end (a left end in FIG. 1) of the outer race 11 can be coupled to the hollow shaft of the propeller shaft by welding.

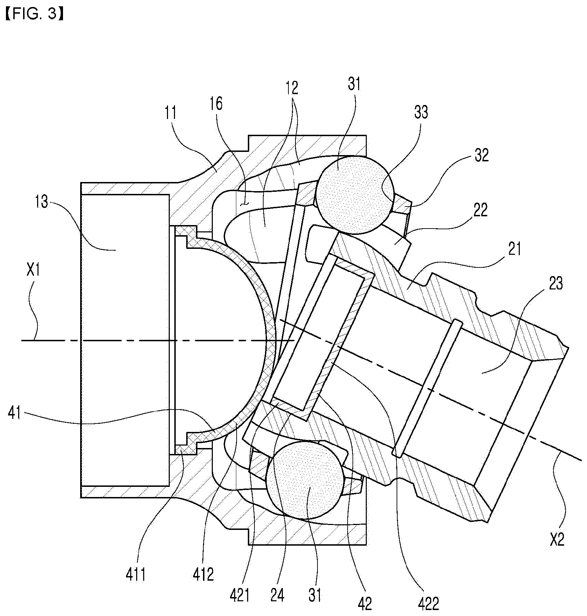

The outer race 11 and the inner race 21 may be configured to rotate for power transmission when they are angularly displaced with each other. In FIG. 1 and FIG. 3, both non-articulated states where the longitudinal axes X1 and X2 of the outer race 11 and inner race 21 are coaxial, and articulated state where they form a certain angle, are respectively shown. In an embodiment of a constant velocity joint according to the present invention, it is configured to allow the outer race 11 and the inner race 21 to rotate while being articulated within a predetermined angular range.

The space between the outer race 11 and the inner race 21 where the ball 31 and the ball cage 32 are positioned is filled with grease. Although not explicitly shown in the drawings, a boot 50 (shown as a dotted line in FIG. 1) for grease sealing between an end (a right end in FIG. 1) of the outer race 11 defining an opening and an outer peripheral surface of the inner race 21 may be provided. The boot 50 can be made of a deformable material like rubber, and one end can be fixed to the outer race 11, while the other end can be fixed to the inner race 21. Although not depicted in the drawings, both ends of the boot 50 can be fastened to the outer race 11 and the inner race 21 respectively by clamping means like a clamp.

In an embodiment of the present invention, the outer race 11 is formed as a single component for weight reduction and has the through-hole 13 formed along the longitudinal axis X1, and a grease retainer 41 is provided to seal the through-hole 13 and prevent grease leakage. The grease retainer 41 is positioned on one side of a space 16 where the ball 31 and ball cage 32 are located and is shaped to have a convex shape protruding towards the ball 31 and the ball cage 32.

The grease retainer 41 may be positioned in a seating groove 14 provided on an inner surface of the outer race 11. The grease retainer 41 may be made of metal material such as steel and may be secured in the seating groove 14 by press-fitting. As shown in FIG. 1 and FIG. 3, the grease retainer 41 may include a ring-shaped securing part 411 that is designed to be situated in the seating groove 14 of the outer race 11, and a sealing part 412 that is connected to the securing part 411 and protrudes convexly towards the space where the ball 31 and the ball cage 32 are placed. For example, the sealing part 412 can be shaped spherically. By forming the sealing part 412 of the retainer 41 to protrude convexly into the space filled with grease, the volume of the space filled with grease can be reduced, which can reduce the amount of grease introduced. A reduction in the amount of grease introduced leads to a reduction in the manufacturing cost and weight of the constant velocity joint.

Furthermore, according to an embodiment of the present invention, the grease retainer 41 coupled to the outer race 11 is configured to limit the rotational angle of the inner race 21 or the ball cage 32. When the outer race 11 and the inner race 21 are angularly displaced to each other, the inner race 21 and the ball cage 32 rotate relative to the outer race 11, and during this rotation, the inner race 23 or the ball cage 32 stops further rotating when contacting the convexly formed grease retainer 41. FIG. 3 exemplarily shows a situation where, during an articulating movement, the inner race 21 collides with the outer race 11 preventing further angulation. By ensuring that the rotation of the inner race 21 or the ball cage 32 does not articulated beyond a certain angle, the movement of the balls 31 housed in the ball cage 32 during the angulation between the outer race 11 and inner race 21 is restricted, and this restriction can prevent the balls 31 from being separated during handling process of the constant velocity joint. By utilizing the shape of the grease retainer 41 to prevent the balls 31 from being separated, the need for additional stacking processes to prevent ball separation can be eliminated and this can contribute to weight reduction and manufacturing cost savings.

Meanwhile, according to an embodiment of the present invention, a grease retainer 42 can be provided to seal a through-hole 23 that extends along a longitudinal axis X2 of the inner race 21. The grease retainer 42 may have a ring-shaped securing part 421 that can be press-fitted into the seating groove 24 formed on the inner surface of the inner race 21, and a sealing part 422 connected to the securing part 421. The grease retainer 42 may be made of metal material like steel and may be pressed into the through-hole 23 of the inner race 21.

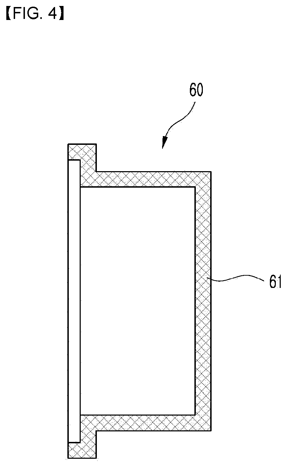

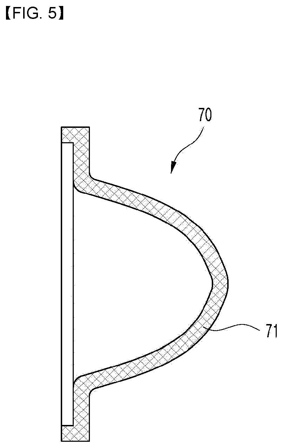

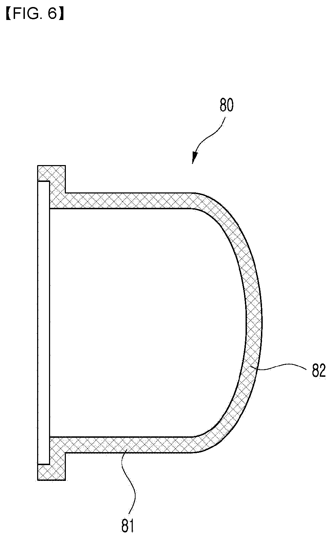

In FIG. 4 to FIG. 6, a grease retainer coupled to the outer race 11 according to another embodiment of the present invention is shown. In the embodiment shown in FIG. 4, a grease retainer 60 may have a cylindrical sealing part 61. In an embodiment shown in FIG. 5, a grease retainer 70 may be equipped with a cone or modified cone-shaped sealing part 71. The modified cone shape refers to a shape slightly altered from the cone shape, as shown in FIG. 5, where the slanted surface slightly protrudes in a convex manner. In an embodiment shown in FIG. 6, a grease retainer 80 may be equipped with a cylindrical sealing part 81 and a spherical sealing part 82 that are interconnected to one another.

Although the embodiments of the present invention have been described above, the scope of rights of the present invention is not limited thereto, and it encompasses all changes and modifications that are within the scope of the appended claims.

### [Industrial Applicability]

This invention relates to a constant velocity joint that can be used in a vehicle's drive mechanism, so it has industrial applicability.

## Claims

1. A constant velocity joint comprising:
an outer race (11) provided with at least a first through-hole (13) extending along a longitudinal axis (X1) and forming a plurality of outer ball grooves (12);
an inner race (21) forming a plurality of inner ball grooves (22) that respectively pair with the outer ball grooves (12);
a plurality of balls (31) that are respectively positioned within a space formed by the pair of the outer ball grooves (12) and the inner ball grooves (22);
a ball cage (32) that accommodates the plurality of balls (31); and
at least a first grease retainer (41) coupled to the outer race (11) to prevent grease, which fills a space where the ball (31) and the ball cage (32) are placed, from leaking through the first through-hole (13),
wherein the first grease retainer (41) has a convex shape protruding towards the ball (31) and the ball cage (32), and
**characterized in that** the first grease retainer (41) is configured to collide with one or more of the inner race (21) and the ball cage (32) during an articulation between the outer race (11) and the inner race (21), thereby limiting rotation of the ball cage (32).

2. The constant velocity joint of claim 1, wherein the convex shape comprises a spherical shape.

3. The constant velocity joint of claim 1, wherein the convex shape comprises a cylindrical shape.

4. The constant velocity joint of claim 1, wherein the convex shape comprises a cone shape or a modified cone shape.

5. The constant velocity joint of claim 1, wherein the convex shape comprises a spherical shape and a cylindrical shape that are interconnected to one another.

6. The constant velocity joint of claim 1,
wherein the inner race (21) is provided with a second through-hole (23) extending along a longitudinal axis (X2) and forming the plurality of inner ball grooves (22);
wherein the first grease retainer (41) is coupled to the outer race (11) to block the first through-hole (13) in order to prevent grease filled into a space where the balls (31) and the ball cage (32) are placed from leaking out; and
further comprising a second grease retainer (42) coupled to the inner race (21) to block the second through-hole (23) in order to prevent grease filled into a space where the balls (31) and the ball cage (32) are placed from leaking out.

## Patentansprüche

1. Gleichlaufgelenk, umfassend:
einen Außenring (11), der mit mindestens einem ersten Durchgangsloch (13) versehen ist, das sich entlang einer Längsachse (X1) erstreckt und eine Vielzahl äußerer Kugelnuten (12) bildet;
einen Innenring (21), der eine Vielzahl innerer Kugelnuten (22) bildet, die jeweils mit den äußeren Kugelnuten (12) ein Paar bilden;
eine Vielzahl von Kugeln (31), die jeweils innerhalb eines durch das Paar aus den äußeren Kugelnuten (12) und den inneren Kugelnuten (22) gebildeten Raums positioniert sind;
einen Kugelkäfig (32), der die Vielzahl von Kugeln (31) aufnimmt; und
mindestens ein erstes Fettrückhalteelement (41), das mit dem Außenring (11) gekoppelt ist, um zu verhindern, dass Fett, das einen Raum füllt, in dem die Kugel (31) und der Kugelkäfig (32) angeordnet sind, durch das erste Durchgangsloch (13) austritt,
wobei das erste Fettrückhalteelement (41) eine konvexe Form aufweist, die in Richtung der Kugel (31) und des Kugelkäfigs (32) vorsteht, und
**dadurch gekennzeichnet, dass** das erste Fettrückhalteelement (41) dazu eingerichtet ist, mit einem oder mehreren aus dem Innenring (21) und dem Kugelkäfig (32) während einer Abwinkelung zwischen dem Außenring (11) und dem Innenring (21) zu kollidieren, wodurch die Drehung des Kugelkäfigs (32) begrenzt wird.

2. Gleichlaufgelenk nach Anspruch 1, wobei die konvexe Form eine Kugelform umfasst.

3. Gleichlaufgelenk nach Anspruch 1, wobei die konvexe Form eine zylindrische Form umfasst.

4. Gleichlaufgelenk nach Anspruch 1, wobei die konvexe Form eine Kegelform oder eine abgewandelte Kegelform umfasst.

5. Gleichlaufgelenk nach Anspruch 1, wobei die konvexe Form eine Kugelform und eine zylindrische Form umfasst, die miteinander verbunden sind.

6. Gleichlaufgelenk nach Anspruch 1,
wobei der Innenring (21) mit einem zweiten Durchgangsloch (23) versehen ist, das sich entlang einer Längsachse (X2) erstreckt und die Vielzahl innerer Kugelnuten (22) bildet;
wobei das erste Fettrückhalteelement (41) mit dem Außenring (11) gekoppelt ist, um das erste Durchgangsloch (13) zu versperren und somit zu verhindern, dass Fett, das in einen Raum eingefüllt ist, in dem die Kugeln (31) und der Kugelkäfig (32) angeordnet sind, nach außen austritt; und
ferner umfassend ein zweites Fettrückhalteelement (42), das mit dem Innenring (21) gekoppelt ist, um das zweite Durchgangsloch (23) zu versperren und somit zu verhindern, dass Fett, das in einen Raum eingefüllt ist, in dem die Kugeln (31) und der Kugelkäfig (32) angeordnet sind, nach außen austritt.

## Revendications

1. Joint homocinétique comprenant:
une bague extérieure (11) pourvue d'au moins un premier trou traversant (13) qui s'étend le long d'un axe longitudinal (X1) et forme une pluralité de rainures à billes extérieures (12) ;
une bague intérieure (21) formant une pluralité de rainures à billes intérieures (22) qui s'apparient respectivement avec les rainures à billes extérieures (12) ;
une pluralité de billes (31) qui sont respectivement positionnées à l'intérieur d'un espace formé par la paire de rainures à billes extérieures (12) et de rainures à billes intérieures (22) ;
une cage à billes (32) qui reçoit la pluralité de billes (31) ; et
au moins un premier élément de retenue de graisse (41) couplé à la bague extérieure (11) pour empêcher la graisse, introduite dans un espace dans lequel la bille (31) et la cage à billes (32) sont placées, de fuir à travers le premier trou traversant (13),
dans lequel le premier élément de retenue de graisse (41) présente une forme convexe faisant saillie vers la bille (31) et la cage à billes (32), et
**caractérisé en ce que** le premier élément de retenue de graisse (41) est configuré pour entrer en collision avec un ou plusieurs éléments parmi la bague intérieure (21) et la cage à billes (32) lors d'une articulation entre la bague extérieure (11) et la bague intérieure (21), limitant ainsi la rotation de la cage à billes (32).

2. Joint homocinétique selon la revendication 1, dans lequel la forme convexe comprend une forme sphérique.

3. Joint homocinétique selon la revendication 1, dans lequel la forme convexe comprend une forme cylindrique.

4. Joint homocinétique selon la revendication 1, dans lequel la forme convexe comprend une forme de cône ou une forme de cône modifiée.

5. Joint homocinétique selon la revendication 1, dans lequel la forme convexe comprend une forme sphérique et une forme cylindrique qui sont interconnectées l'une à l'autre.

6. Joint homocinétique selon la revendication 1,
dans lequel la bague intérieure (21) est pourvue d'un second trou traversant (23) qui s'étend le long d'un axe longitudinal (X2) et forme la pluralité de rainures à billes intérieures (22) ;
dans lequel le premier élément de retenue de graisse (41) est couplé à la bague extérieure (11) pour bloquer le premier trou traversant (13) afin d'empêcher la graisse, qui remplit un espace dans lequel les billes (31) et la cage à billes (32) sont placées, de s'échapper ; et
comprenant en outre un second élément de retenue de graisse (42) couplé à la bague intérieure (21) pour bloquer le second trou traversant (23) afin d'empêcher la graisse, qui remplit un espace dans lequel les billes (31) et la cage à billes (32) sont placées, de s'échapper.
